# FASCICULE DE BREVET EUROPEEN

(11) **EP 2 717 993 B1**
(45) Date de publication et mention de la délivrance du brevet: **16.12.2015**
(21) Numéro de dépôt: 12729085.6
(22) Date de dépôt: 08.06.2012
(51) Int. Cl.: B01D 53/02, B01D 53/68, C01B 9/08, C01D 3/02, C01F 5/28, B01J 20/04, C01G 43/06

(54) **UTILISATION D'UN COMPOSÉ KMgF3 POUR PIÉGER DES MÉTAUX PRÉSENTS SOUS FORME DE FLUORURES ET/OU D'OXYFLUORURES DANS UNE PHASE GAZEUSE OU LIQUIDE**
VERWENDUNG EINER KMGF3-VERBINDUNG ZUM EINFANGEN VON METALLEN IN FORM VON FLUORIDEN UND/ODER OXYFLUORIDEN IN EINER GASFÖRMIGEN ODER FLÜSSIGEN PHASE
USE OF A KMGF3 COMPOUND FOR TRAPPING METALS IN THE FORM OF FLUORIDES AND/OR OXYFLUORIDES IN A GASEOUS OR A LIQUID PHASE

(30) Priorité: 09.06.2011 FR 1155055
(43) Date de publication de la demande: 16.04.2014
(73) Titulaire: AREVA NC, 92400 Courbevoie (FR)
(72) Inventeur: MOREL, Bertrand, F-26130 Saint Paul Trois Chateaux (FR); LEITE, Lorraine, F-07700 Saint Marcel d'Ardeche (FR); MOCH, Laurent, F-07700 Bourg Saint Andeol (FR); DEMOURGUES, Alain, F-33600 Pessac (FR); CLARENC, Romain, F-65710 Beaudean (FR); TRESSAUD, Alain, F-33600 Pessac (FR); DURAND, Etienne, F-33440 Ambares Et Lagrave (FR)
(74) Mandataire: Ahner, Philippe
(86) Numéro de dépôt international: PCT/EP2012/060875
(87) Numéro de publication internationale: WO 2012/168420

(56) Documents cités:
- GB-A- 1 051 608
- US-A- 3 178 258
- US-A- 3 625 661
- US-A- 4 364 906
- US-A- 5 826 163
- KRISHNA MURTHY ET AL: "Sol-gel-fluorination synthesis of amorphous magnesium fluoride", JOURNAL OF SOLID STATE CHEMISTRY, ORLANDO, FL, US, vol. 179, no. 3, 1 mars 2006 (2006-03-01), pages 739-746, XP005300813, ISSN: 0022-4596, DOI: 10.1016/J.JSSC.2005.11.033
- PATIL ET AL: "Non-aqueous sol-gel synthesis, characterization and catalytic properties of metal fluoride supported palladium nanoparticles", APPLIED CATALYSIS B: ENVIRONMENTAL, ELSEVIER, AMSTERDAM, NL, vol. 78, no. 1-2, 12 décembre 2007 (2007-12-12), pages 80-91, XP022387104, ISSN: 0926-3373

## Description

### DOMAINE TECHNIQUE

La présente invention se rapporte au domaine du piégeage d'espèces métalliques.

Plus précisément, elle se rapporte à l'utilisation d'un trifluorure de magnésium et de potassium (appelé ci-après « composé KMgF₃ ») pour piéger des métaux présents à l'état de fluorures et/ou d'oxyfluorures dans une phase gazeuse ou liquide.

Elle se rapporte également à un composé KMgF₃ présentant une haute surface spécifique ainsi qu'à des procédés permettant de préparer ce composé.

L'invention trouve notamment application dans l'industrie nucléaire où elle peut avantageusement être mise à profit pour purifier l'hexafluorure d'uranium (UF₆) présent dans un flux gazeux ou liquide vis-à-vis des impuretés métalliques qui se trouvent également dans ce flux.

### ÉTAT DE LA TECHNIQUE ANTÉRIEURE

Le cycle du combustible nucléaire désigne l'ensemble des étapes qui, de l'extraction du minerai uranifère au stockage des déchets, permettent de fournir les combustibles aux réacteurs nucléaires afin de générer de l'énergie électrique distribuable.

Ce cycle comprend une étape qui consiste à convertir l'uranium extrait des mines, concentré sous forme de *« yellow cake* », en hexafluorure d'uranium tout en lui donnant le degré de pureté indispensable à la fabrication des combustibles nucléaires.

Ce degré de pureté est actuellement fixé par la norme ASTM C787, en vertu de laquelle l'hexafluorure d'uranium doit comprendre typiquement moins de 1 ppm d'impuretés.

Or, le « *yellow cake »* peut contenir plusieurs milliers de ppm d'impuretés à fluorures et/ou oxyfluorures volatils, en particulier le molybdène (Mo), le vanadium (V) et le tungstène (W).

Le cycle du combustible nucléaire, tel qu'il est mis en oeuvre en France, comprend aussi une étape qui vise à convertir le nitrate d'uranyle issu du retraitement de combustibles usés en hexafluorure d'uranium en vue de le valoriser en tant que matière première dans la fabrication de combustibles neufs.

Là également, l'hexafluorure d'uranium résultant de cette conversion doit répondre aux exigences de la norme ASTM C787.

Or, le nitrate d'uranyle issu du retraitement de combustibles nucléaires usés contient, lui aussi, plusieurs dizaines de ppb d'impuretés à fluorures et/ou oxyfluorures volatils, telles que le technétium (Tc), le neptunium (Np), le plutonium (Pu).

Plusieurs voies de purification de l'hexafluorure d'uranium ont été explorées.

En particulier, il est possible de :
a) purifier l'uranium par extraction liquide-liquide en milieu acide nitrique ou sulfurique mais cette technique présente l'inconvénient de générer de fortes quantités d'effluents à traiter ;
b) distiller l'hexafluorure d'uranium mais cette technique implique de mettre en place des colonnes de plusieurs dizaines de mètres de hauteur et de devoir gérer les impuretés produites par cette distillation ;
c) précipiter sélectivement l'uranium en tétroxyde d'uranium (UO₄) par réaction avec le peroxyde d'hydrogène mais cette technique se révèle inefficace pour purifier l'uranium vis-à-vis des impuretés métalliques qui sont susceptibles de former des peroxydes comme le vanadium, le titane (Ti) et le zirconium (Zr) ;
d) purifier l'hexafluorure d'uranium par passage du milieu dans lequel il se trouve au travers d'un piège apte à retenir les impuretés dont on souhaite le débarrasser.

Il a été montré que des pièges composés de difluorure de magnésium (MgF₂), trifluorure d'aluminium (AlF₃), fluorure de sodium (NaF) ou encore de difluorure de calcium (CaF₂) sont capables, lorsqu'ils présentent une surface spécifique suffisante, de retenir le pentafluorure de vanadium (VF₅) et l'oxyde de trifluorure de vanadium (VOF₃).

Il a, de plus, été montré que le difluorure de magnésium est capable de retenir aussi le tétrafluorure de titane (TiF₄), les pentafluorures de niobium (NbF₅), de tantale (TaF₅) et d'antimoine (SbF₅), l'hexafluorure de molybdène (MoF₆) ainsi que des fluorures de technétium. L'utilisation du difluorure de magnésium pour décontaminer l'hexafluorure d'uranium en technétium est d'ailleurs décrite dans le brevet US 5,826,163 (référence **[1]).**

Toutefois, dans le cadre de leurs travaux, les inventeurs ont constaté que l'utilisation de pièges composés de difluorure de magnésium ne saurait être envisagée pour purifier l'hexafluorure d'uranium à une échelle industrielle, notamment parce que le difluorure de magnésium retient une quantité d'hexafluorure d'uranium pratiquement équivalente à celle des fluorures et oxyfluorures dont on veut le débarrasser.

Il en résulte un encrassement rapide de ces pièges, ce qui implique de les remplacer fréquemment par des pièges neufs.

Les inventeurs se sont donc fixé pour but général de trouver un matériau qui permette de piéger les impuretés présentes dans l'hexafluorure d'uranium issu de la conversion du « *yellow cake »* ou du nitrate d'uranyle de retraitement, et qui soit exempt des inconvénients présentés par le difluorure de magnésium.

En particulier, ils se sont fixé pour but que ce matériau soit capable de piéger suffisamment les impuretés présentes dans l'hexafluorure d'uranium pour que ce dernier puisse répondre à la norme ASTM C787, mais sans toutefois piéger l'hexafluorure d'uranium lui-même ou que très peu.

Ils se sont de plus fixé pour but que ce matériau puisse être utilisé pour purifier l'hexafluorure d'uranium aussi bien lorsque ce dernier est en phase liquide qu'en phase gazeuse.

Ils se sont encore fixé pour but que ce matériau soit disponible commercialement ou qu'à défaut, il puisse être préparé par des procédés simples à mettre en oeuvre et à des coûts compatibles avec une exploitation industrielle.

### EXPOSÉ DE L'INVENTION

Ces buts sont atteints par la présente invention qui propose d'utiliser un composé KMgF₃ pour piéger des métaux présents sous la forme de fluorures et/ou d'oxyfluorures dans une phase gazeuse ou liquide.

Dans le cadre de leurs travaux, les inventeurs ont, en effet, constaté, que les composés KMgF₃ sont aptes, lorsqu'ils sont mis en contact avec une phase gazeuse ou liquide dans laquelle sont présents des métaux tels que le technétium, le rhénium, le vanadium, le molybdène, le niobium, le tantale, l'antimoine et le titane, sous forme de fluorures et/ou d'oxyfluorures, de retenir très efficacement ces métaux.

Ils ont également constaté que ces composés ne retiennent, par contre, que peu ou que très peu l'hexafluorure d'uranium.

Par voie de conséquence, l'utilisation de composés KMgF₃ présente un intérêt tout particulier pour purifier l'hexafluorure d'uranium et, en particulier, celui résultant de la conversion d'uranium naturel ou de la conversion d'uranium issu du retraitement de combustibles nucléaires usés.

Conformément à l'invention, le composé KMgF₃ présente, de préférence, une surface spécifique égale ou supérieure à 30 m²/g telle que déterminée par la méthode Brunauer, Emmett et Teller, plus connue sous le nom de « méthode BET », sur ce composé à l'état de poudre. Les inventeurs ont, en effet, constaté que les capacités de piégeage de composés KMgF₃ sont meilleures lorsque la surface spécifique de ces composés atteint au moins cette valeur.

Toutefois, il est préférable que la surface spécifique du composé KMgF₃ n'excède pas 150 m²/g, valeur au-delà de laquelle sa stabilité chimique commence à être compromise, ce qui devient un frein à son utilisation pour piéger des métaux.

Aussi, le composé KMgF₃ comprend-il typiquement une surface spécifique allant de 30 à 150 m²/g et, mieux encore, de 70 à 120 m²/g.

Dans le cadre de l'invention, le composé KMgF₃ peut être utilisé sous la forme d'une poudre libre. Toutefois, on préfère, pour des raisons de perte de charge dans les dispositifs (par exemple, du type colonnes) dans lesquelles il sera utilisé, que ce composé soit sous la forme d'éléments solides obtenus par des procédés classiquement employés pour la mise en forme de poudres du type agglomérats, granulés, pastilles ou analogues.

Ainsi, par exemple, l'utilisation d'un composé KMgF₃ se présentant sous la forme de pastilles dont la plus grande dimension est au plus égale à 3 mm et, notamment, de pastilles dont les dimensions vont de 2 à 3 mm s'est révélée particulièrement avantageuse.

Par ailleurs, le composé KMgF₃ peut être utilisé seul ou conjointement avec un autre composé connu pour présenter des capacités de piégeage d'espèces chimiques et, en particulier, métalliques fluorées et/ou oxyfluorées. Ainsi, par exemple, le composé KMgF₃ peut être utilisé en conjugaison avec du difluorure de magnésium, auquel cas on préfère que la fraction massique du composé KMgF₃ dans le mélange KMgF₃/MgF₂ soit au moins égale à 0,2.

Quelle que soit la forme sous laquelle il est utilisé, le composé KMgF₃ est capable de piéger des métaux présents dans une phase gazeuse ou liquide à l'état de fluorures et/ou d'oxyfluorures dès qu'il est mis en contact avec cette phase.

Néanmoins, pour optimiser ses capacités de piégeage, on préfère le soumettre, préalablement à son utilisation, à un traitement de fluoration qui permet de réduire la quantité d'uranium retenue.

Ce traitement de fluoration peut être réalisé en mettant le composé KMgF₃ en contact avec soit du fluor pur, soit un mélange comprenant du fluor et un ou plusieurs autres gaz choisis parmi les gaz neutres comme, par exemple, le diazote ou l'argon, et les gaz à base de fluor comme, par exemple, un mélange de fluor, d'argon et d'acide fluorhydrique. Ainsi, par exemple, le traitement de fluoration peut être réalisé en utilisant un mélange de fluor, de diazote et d'acide fluorhydrique.

Le traitement de fluoration peut être conduit à une température allant de la température ambiante à 500°C, préférence étant donnée aux températures comprises entre 200 et 300°C.

Par ailleurs, le composé KMgF₃ est, de préférence, utilisé, c'est-à-dire mis en contact avec la phase gazeuse ou liquide, à une température allant de 80 à 200°C, étant entendu qu'il est également possible de l'utiliser à d'autres températures et, notamment, à température ambiante, c'est-à-dire à la température qui règne dans les locaux dans lesquels il est prévu de l'utiliser.

Conformément à l'invention, cette mise en contact est maintenue pendant une durée minimum de 20 secondes, allant, de préférence, de 60 à 300 secondes dans le cas d'une phase gazeuse, et de 60 à 600 secondes dans le cas d'une phase liquide, en fonction des impuretés.

Le composé KMgF₃ utile selon l'invention peut être préparé par des procédés faciles à mettre en oeuvre.

Ainsi, notamment, il peut être obtenu par :
- réaction entre un composé de magnésium, par exemple un diacétate de magnésium tétrahydraté, et du bifluorure de potassium en solution dans un alcool ou un mélange d'alcools, en présence d'acide fluorhydrique ; puis
- calcination du produit résultant de cette réaction.

Assistée par un chauffage aux micro-ondes, de préférence dans une gamme de températures de 100 à 200°C, cette réaction conduit à l'obtention de composés KMgF₃ présentant une surface spécifique élevée, typiquement égale ou supérieure à 100 m²/g, telle que déterminée par la méthode BET.

En variante, il peut également être obtenu en imprégnant du difluorure de magnésium, de préférence de haute surface spécifique, par une solution aqueuse comprenant du bifluorure de potassium et, éventuellement, de l'acide fluorhydrique, cette imprégnation étant préférentiellement réalisée à une température de l'ordre de 50 à 70°C. En fonction des conditions stoechiométriques, le produit obtenu peut être constitué soit uniquement de KMgF₃ soit d'un mélange de KMgF₃ et de MgF₂. À cet égard, il a été constaté qu'un ratio KF/MgF₂ supérieur à 1,1 est nécessaire pour obtenir un produit dont la caractérisation par diffraction aux rayons X montre qu'il est uniquement constitué de KMgF₃.

Un procédé de préparation d'un composé KMgF₃ qui présente une surface spécifique au moins égale à 30 m²/g et au plus égale à 150 m²/g (telle que déterminée par la méthode BET) comprend :
- la réaction entre un composé de magnésium et du bifluorure de potassium en solution dans un alcool ou un mélange d'alcools, en présence d'acide fluorhydrique ; puis
- la calcination du produit résultant de cette réaction.

Un deuxième procédé de préparation de ce composé comprend l'imprégnation de difluorure de magnésium par une solution aqueuse comprenant du bifluorure de potassium et, éventuellement, de l'acide fluorhydrique.

D'autres caractéristiques et avantages de l'invention apparaîtront du complément de description qui suit et qui se rapporte à des exemples de préparation de composés KMgF₃ utiles selon l'invention et de mise en évidence de leurs propriétés.

Bien entendu, ce complément de description n'est donné qu'à titre d'illustration de l'invention et n'en constitue en aucun cas une limitation.

### BRÈVE DESCRIPTION DES FIGURES

La Figure 1 est un schéma de principe d'un dispositif expérimental ayant permis aux inventeurs d'évaluer l'aptitude de composés KMgF₃ à servir de pièges vis-à-vis de fluorures et oxyfluorures présents en phase gazeuse.
La Figure 2 représente le spectre de diffraction des rayons X d'une poudre de KMgF₃ avant que cette poudre ne soit utilisée pour piéger de l'hexafluorure de rhénium.
La Figure 3 représente le spectre de diffraction des rayons X de la poudre dont le spectre de diffraction des rayons X est illustré sur la Figure 2, mais après que cette poudre a été utilisée pour piéger de l'hexafluorure de rhénium et avant qu'elle ne soit remise au contact de l'air ambiant.
La Figure 4 représente le spectre de diffraction des rayons X de la poudre dont le spectre de diffraction aux rayons X est illustré sur la Figure 2, mais après que cette poudre a été utilisée pour piéger de l'hexafluorure de rhénium et après qu'elle a été remise au contact de l'air ambiant.
La Figure 5 représente le spectre infrarouge à transformée de Fourier (FT-IR) de la poudre dont le spectre de diffraction des rayons X est illustré sur la Figure 4.

### EXPOSÉ DÉTAILLÉ DE MODES DE RÉALISATION PARTICULIERS

### Exemple 1 : Préparation d'un composé KMgF₃ assistée par micro-ondes

Dans un réacteur de 100 mL en polytétra-fluoroéthylène (Téflon™), on introduit 40 mL d'isopropanol, 1,8 g de diacétate de magnésium tétrahydraté (Mg(CH₃COO)₂·4H₂O), 0,71 g de bifluorure de potassium (KF,HF), 360 mL d'acide fluorhydrique liquide à 40% (HF) ainsi qu'un agitateur magnétique.

Le réacteur est fermé, puis placé dans un support permettant de contrôler la pression et la température régnant dans ce réacteur.

Le support est lui-même placé dans un four à micro-ondes qui est commercialisé par la société CEM sous la dénomination commerciale Mars 5™. Ce four, qui fonctionne à une fréquence de 2,45 GHz, est réglé à une puissance de 300 W et programmé pour atteindre une température de 150°C en 5 minutes et rester à cette température pendant 1 heure.

Le produit de synthèse obtenu à ce stade est alors centrifugé pendant 10 minutes à 5000 tours par minute (tr/min) puis séché pendant 2 heures dans une étuve à 100°C. Il est ensuite calciné pendant 5 heures à 300°C.

On obtient ainsi un produit qui se présente sous la forme d'une poudre, qui est constitué de KMgF₃ et qui présente une surface spécifique de 120 m²/g, telle que déterminée par la méthode BET.

### Exemple 2 : Préparation d'un composé KMgF₃ par imprégnation

Dans le présent exemple, la préparation d'un composé KMgF₃ est réalisée par un procédé dit « d'imprégnation ». Elle est effectuée selon le protocole suivant.

7,1 g de bifluorure de potassium (KF,HF) sont dissous dans 10 mL d'eau.

Puis, sont ajoutés à cette solution 5,2 g de difluorure de magnésium (MgF₂) de surface spécifique égale à 80 m²/g.

La suspension ainsi obtenue est alors soumise à une agitation pendant 4 heures à 60°C, puis placée pendant 48 heures à température ambiante.

Le produit résultant est ensuite séché à 100°C dans une étuve, lavé avec 200 mL d'eau, centrifugé pendant 10 minutes à 5000 tr/min, de nouveau séché à 100°C dans l'étuve puis calciné pendant 5 heures à 200°C.

On obtient ainsi un produit qui se présente sous la forme d'une poudre, qui est constitué de KMgF₃ et qui présente une surface spécifique de 30 m²/g, telle que déterminée par la méthode BET.

### Exemple 3 : Évaluation de l'aptitude d'un composé KMgF₃ à piéger l'hexafluorure de technétium (TcF₆) et caractérisation des produits formés au cours de ce piégeage

Le présent exemple se rapporte à un test destiné à évaluer l'aptitude d'un composé KMgF₃ à piéger TcF₆, et à caractériser les produits issus de la réaction du composé KMgF₃ avec l'hexafluorure de technétium.

Le technétium étant un élément radioactif, le test est réalisé en utilisant de l'hexafluorure de rhénium qui présente le même comportement chimique que l'hexafluorure de technétium -le rhénium et le technétium appartenant en effet à la même colonne (VIIB) du tableau périodique des éléments ou tableau de Mendeleïev- mais est plus stable que lui.

Ce test consiste à faire circuler, pendant 1 heure et à température ambiante, un flux gazeux d'hexafluorure de rhénium sur un échantillon du composé KMgF₃ dans un dispositif préalablement débarrassé de toute trace d'humidité pour éviter que l'hexafluorure de rhénium ne s'hydrolyse, puis à caractériser par diffraction des rayons X et par spectroscopie infrarouge à transformée de Fourier (FT-IR) les composés issus de la réaction du composé KMgF₃ avec l'hexafluorure de rhénium.

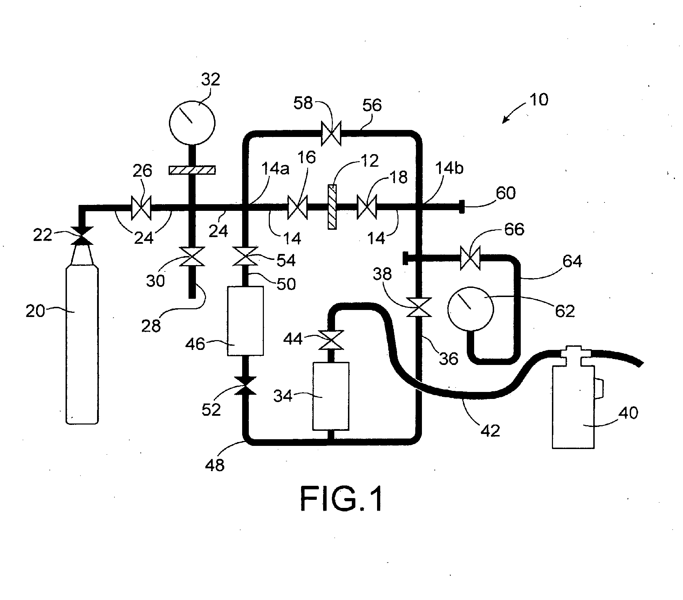

Ce test est réalisé en utilisant :
- un composé KMgF₃ se présentant sous la forme d'une poudre et ayant été préparé comme décrit dans l'Exemple 1 ci-avant ; et
- le dispositif expérimental 10 qui est illustré schématiquement sur la figure 1.

Comme le montre cette figure, ce dispositif comprend un porte-échantillon 12 amovible, qui est situé sur le parcours d'un conduit 14 et dans lequel le composé KMgF₃ est destiné à être placé. Le conduit 14 est muni de deux vannes quart de tour, respectivement 16 et 18, qui sont situées de part et d'autre du porte-échantillon 12 et qui permettent d'isoler ce dernier du reste du dispositif, notamment pour sa mise en place et son retrait.

Le conduit 14 est connecté, au niveau de son extrémité 14a, à un premier circuit qui permet d'alimenter le dispositif en hexafluorure de rhénium d'une part, et en argon d'autre part.

Ce premier circuit comprend :
- une bouteille 20, qui contient de l'hexafluorure de rhénium sous pression, qui est munie d'un détendeur lui-même muni d'une vanne quart de tour 22, et qui est reliée à l'extrémité 14a du conduit 14 par un conduit 24 muni d'une vanne quart de tour 26 ;
- une arrivée d'argon 28, qui débouche sur le conduit 24 et qui est munie d'une vanne quart de tour 30 ; et
- un manomètre de précision 32, qui permet de contrôler la pression à laquelle l'hexafluorure de rhénium ou l'argon est introduit dans le dispositif.

Le conduit 14 est aussi connecté, au niveau de chacune de ses extrémités 14a et 14b, à un deuxième circuit qui permet notamment de mettre le dispositif sous vide et, en fin de test, d'éliminer l'hexafluorure de rhénium n'ayant pas réagi avec le composé KMgF₃.

Ce deuxième circuit comprend :
- un piège 34 à base de fluorure de sodium, qui est relié à l'extrémité 14b du conduit 14 par un conduit 36 muni d'une vanne quart de tour 38 ;
- un piège cryogénique 40 qui est relié, d'une part, au piège 34 par un conduit 42 muni d'une vanne quart de tour 44 et, d'autre part, à une pompe à vide (non représentée sur la Figure 1) ;
- une cellule 46 de mélange de gaz, qui est reliée, d'une part, au piège 34 par un conduit 48 et, d'autre part, à l'extrémité 14a du conduit 14 par un conduit 50, chacun des conduits 48 et 50 étant muni d'une vanne quart de tour, respectivement 52 et 54 ; et
- un conduit 56, qui relie directement les extrémités 14a et 14b du conduit 14 et qui est muni d'une vanne quart de tour 58.

Le dispositif comprend, en outre, un thermocouple 60 permettant de contrôler la température régnant à l'intérieur de ce dispositif et un manomètre 62, qui est relié au conduit 36 par un conduit 64 muni d'une vanne quart de tour 66 et qui permet de contrôler la pression régnant dans le deuxième circuit.

Le porte-échantillon 12 est constitué d'une série de rondelles en acier inoxydable placées les unes à la suite des autres, à l'intérieur desquelles est placé le composé KMgF₃ et qui sont disposées entre des filtres en nickel fritté pour éviter que la poudre ne soit entraînée hors de ce porte-échantillon, notamment sous l'effet du vide.

Préalablement au test, la poudre de KMgF₃ est traitée par un flux gazeux composé de 10% de fluor et de 90% d'argon (v/v) pendant 5 heures.

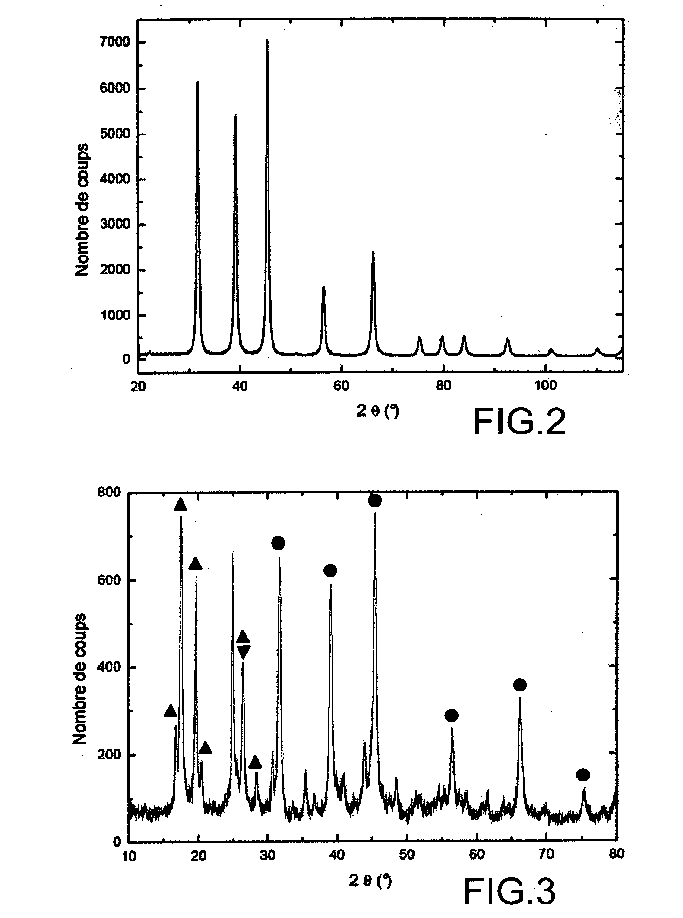

À l'issue de ce traitement, la poudre de KMgF₃ présente une surface spécifique d'environ 100 m²/g telle que déterminée par la méthode BET, un taux d'oxygène de 2,2% massique et des tailles de cristallites de 16 nm telles que déterminées avec le logiciel Fullprof. Elle présente, de plus, le spectre de diffraction des rayons X qui est illustré sur la Figure 2.

La poudre de KMgF₃ ainsi préparée est introduite dans le porte-échantillon 12 sous une atmosphère sèche (c'est-à-dire dans une boîte à gants totalement déshumidifiée) pour éviter que l'hexafluorure de rhénium ne s'hydrolyse. La masse de poudre de KMgF₃ introduite dans le porte-échantillon 12 est de 67,7 mg.

Ce porte-échantillon est alors placé dans le dispositif 10. À cet instant, toutes les vannes à l'exception des vannes 26 et 30 sont ouvertes et l'ensemble du dispositif est placé sous vide primaire dynamique pendant 30 minutes afin d'éliminer toute trace d'humidité dans ce dispositif.

Après quoi, les pièges 34 et 40 ainsi que la pompe à vide sont isolés du reste du dispositif par fermeture des vannes 44, 38 et 52 et le dispositif se retrouve ainsi sous vide primaire statique.

Les vannes 16 et 18 sont fermées pour isoler l'échantillon de KMgF₃. Les vannes 58 et 66 sont également fermées. Les vannes 22 et 26 sont ouvertes afin d'introduire l'hexafluorure de rhénium dans le dispositif à une pression de 150 mbar (15 kPa), cette pression étant contrôlée à l'aide du manomètre 32.

On referme alors les vannes 22 et 26 puis on ouvre la vanne 16 afin de mettre l'échantillon de KMgF₃ en contact avec l'hexafluorure de rhénium. La durée de contact est de 1 heure et ce contact est effectué à température ambiante.

Après quoi, les vannes 44, 38, 18, 60 et 52 sont successivement ouvertes afin d'établir un vide dynamique pendant 30 minutes et d'éliminer toute trace d'hexafluorure de rhénium n'ayant pas réagi.

Le porte-échantillon 12 est alors isolé en fermant les vannes 16 et 18 et la pompe à vide peut alors être arrêtée.

Le porte-échantillon 12 est retiré du dispositif 10 et introduit dans une boîte à gants sous atmosphère neutre afin de récupérer la poudre de KMgF₃ qu'il contient. Cette poudre présente une couleur bleu-gris alors qu'elle était blanche avant son introduction dans le porte-échantillons 12. Sa masse est de 94,8 mg, ce qui équivaut à une prise de masse de 40%.

La poudre ainsi obtenue est caractérisée par diffraction des rayons X, d'abord dans un environnement sec, puis après mise en contact avec l'air ambiant.

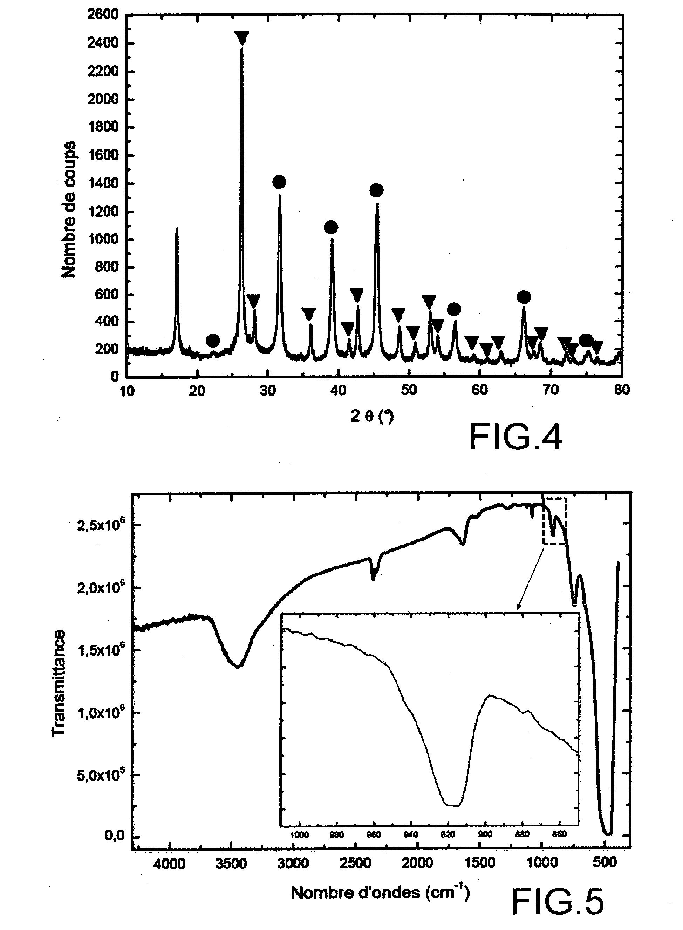

Les spectres obtenus sont représentés sur les Figures 3 et 4.

La poudre est également caractérisée par FT-IR et le spectre obtenu est représenté sur la Figure 5.

Les Figures 3 et 4 montrent que la poudre de KMgF₃ a effectivement piégé l'hexafluorure de rhénium puisqu'il s'est formé au moins deux phases au sein de cette poudre, à savoir :
- une première phase qui correspond à de l'octofluororhénate de potassium (K₂ReF₈) et dont les pics caractéristiques sont matérialisés sur les Figures 3 et 4 par le symbole ▲ ; et
- une deuxième phase qui correspond à du perrhénate de potassium (KReO₄) et dont les pics caractéristiques sont matérialisés sur les Figures 3 et 4 par le symbole ▼ ;
   les pics caractéristiques du KMgF₃ étant, eux, matérialisés sur ces figures par le symbole ●.

D'autres phases sont présentes dans la poudre puisque certains pics de diffraction, qui ne correspondent ni à KMgF₃ ni à K₂ReF₈ ni à KReO₄, sont présents sur le spectre illustré sur la Figure 3 mais ces phases n'ont pas été identifiées.

La comparaison des Figures 3 et 4 montre de plus que, si la poudre est directement remise au contact de l'air ambiant après piégeage de ReF₆, la phase K₂ReF₈ et les autres phases en présence étant très instables, elles sont cristallisées sous forme de KReO₄.

Enfin, lors de la remise à l'air, la présence de rhénium sous forme de KReO₄ peut être caractérisée, comme le montre la Figure 5, par FT-IR avec l'apparition d'une bande d'adsorption vers 920 cm⁻¹ correspondant à une liaison Re-O.

### Exemple 4 : Évaluation de l'aptitude d'un composé KMgF₃ à purifier l'UF₆ présent dans un flux gazeux contenant également du TcF₆ en tant qu'impureté

Le présent exemple se rapporte à un test destiné à évaluer l'aptitude d'un composé KMgF₃ à purifier l'hexafluorure d'uranium présent dans un flux gazeux vis-à-vis de l'hexafluorure de technétium se trouvant également dans ce flux.

Comme le test précédent, ce test est réalisé en utilisant :
- de l'hexafluorure de rhénium pour simuler l'hexafluorure de technétium, en mélange gazeux avec de l'hexafluorure d'uranium ; et
- un composé KMgF₃ se présentant sous la forme d'une poudre et ayant été préparé comme décrit dans l'Exemple 1 ci-avant.

Le rapport molaire de l'hexafluorure de rhénium à l'hexafluorure d'uranium est de 1/5 ppm.

Le test est conduit au moyen d'un dispositif expérimental qui comprend principalement et successivement une capacité alimentée par une arrivée d'UF₆ et une arrivée de ReF₆ et dans laquelle s'effectue le mélange des gaz, une colonne d'absorption chauffée par un cordon chauffant relié à un régulateur de température et dans laquelle est placé le composé KMgF₃, un piège cryogénique permettant aux gaz de se condenser en sortie de colonne, un pot permettant d'hydrolyser les gaz ainsi condensés, et une pompe à vide.

Le test est effectué à 10°C et à une pression initiale de 200 mbar (20 kPa) environ.

La masse de composé KMgF₃ utilisé est de 158 mg. Le temps de contact de ce composé avec le mélange gazeux est de 158 secondes.

En fin de test, le contenu de la colonne contenant initialement le composé KMgF₃ est également hydrolysé afin de déterminer les quantités de ReF₆ et d'UF₆ piégées par ce composé.

Ce test montre que le composé KMgF₃ a retenu 75% de l'hexafluorure de rhénium introduit dans la colonne d'absorption mais seulement 0,3% de l'UF₆ introduit dans cette colonne. Ceci correspond à un facteur de décontamination égal à 4.

À titre de comparaison, un test réalisé dans les mêmes conditions mais en utilisant du difluorure de magnésium en lieu et place du composé KMgF₃, a montré que ce difluorure de magnésium retient 21% d'hexafluorure de rhénium (soit une quantité 4 fois plus faible que celle retenue par le composé KMgF₃) et 17% d'hexafluorure d'uranium (soit une quantité 57 fois plus élevée que celle retenue par le composé KMgF₃). Dans ce cas, le facteur de décontamination n'est que de 1,3.

### Exemple 5 : Évaluation de l'aptitude d'un composé KMgF₃ à purifier l'UF₆ présent dans un flux gazeux contenant également du VOF₃ en tant qu'impureté

Au moyen d'un dispositif expérimental se fondant sur le même principe que celui utilisé dans l'Exemple 4 ci-avant, on évalue ici l'aptitude d'un composé KMgF₃ à purifier l'hexafluorure d'uranium présent dans un flux gazeux vis-à-vis de l'oxyde de trifluorure de vanadium se trouvant également dans ce flux.

Pour ce faire, après avoir rempli une colonne d'absorption avec 140 mg d'un composé KMgF₃ se présentant sous la forme d'une poudre et ayant été synthétisé comme décrit dans l'Exemple 1 ci-avant, on fait circuler dans la colonne un flux gazeux comprenant de l'hexafluorure d'uranium contaminé par 5900 ppm d'oxyde de trifluorure de vanadium.

La durée de contact entre le composé KMgF₃ et le flux gazeux est de 55 secondes.

L'expérience est effectuée à 100, 150 et 200°C.

L'hydrolyse des gaz condensés ainsi que du contenu de la colonne montre que, pour chacune de ces températures, le composé KMgF₃ a retenu plus de 99% de l'oxyde de trifluorure de vanadium introduit dans la colonne d'absorption mais seulement 2,5% de l'hexafluorure d'uranium introduit dans cette colonne, ce qui correspond à un facteur de décontamination supérieur à 100.

La teneur résiduelle en oxyde de trifluorure de vanadium du mélange ReF₆/UF₆ est, elle, de 30 ppm.

### Exemple 6 : Évaluation de l'aptitude d'un composé KMgF₃ à purifier l'UF₆ présent dans un flux gazeux contenant également du MoF₆ en tant qu'impureté

Ce test est similaire aux deux tests précédemment décrits dans les Exemples 4 et 5 ci-avant, l'impureté considérée ici étant de l'hexafluorure de molybdène (MoF₆).

Aussi, après avoir rempli une colonne d'absorption avec 1,8 g d'un composé KMgF₃ sous la forme d'une poudre et ayant été préparé comme décrit dans l'Exemple 1 ci-avant, on fait circuler sur ce composé un flux gazeux comprenant de l'hexafluorure d'uranium contaminé par 30 ppm d'hexafluorure de molybdène.

La durée de contact entre le composé KMgF₃ et le flux gazeux est de 100 secondes.

L'expérience est réalisée à une température de 100°C.

En sortie de colonne, le flux gazeux ne contient plus que 0,3 ppm d'hexafluorure de molybdène, ce qui correspond à un facteur de décontamination de 100.

### Exemple 7 : Évaluation de l'aptitude d'un composé KMgF₃ à purifier l'UF₆ présent dans un flux liquide contenant également du MoF₆ et du VOF₃ en tant qu'impuretés

On évalue l'aptitude d'un composé KMgF₃ à purifier de l'hexafluorure d'uranium présent dans un flux liquide vis-à-vis de l'hexafluorure de molybdène et de l'oxyde de trifluorure de vanadium présents également dans ce flux.

Ce test est conduit au moyen d'un dispositif expérimental basé sur le même principe que celui utilisé dans l'Exemple 4 ci-avant.

On introduit tout d'abord, dans une colonne d'absorption, 600 mg d'un composé KMgF₃ ayant été préparé comme décrit dans l'Exemple 1 ci-avant mais se présentant sous la forme de pastilles de 2 mm de diamètre.

On fait couler dans cette colonne environ 30 g d'un mélange liquide comprenant de l'hexafluorure d'uranium, 350 ppb d'hexafluorure de molybdène et 350 ppb d'oxyde de trifluorure de vanadium, ce mélange ayant été préalablement homogénéisé pendant 8 heures à 80°C.

Ce mélange s'écoule à une vitesse de 0,01 cm/s et reste en contact avec les pastilles de composé KMgF₃ pendant 288 secondes.

Ce test montre qu'en sortie de colonne, le mélange liquide ne contient plus ni d'oxyde de trifluorure de vanadium ni d'hexafluorure de molybdène.

Le facteur de décontamination est égal à 3 et la proportion d'hexafluorure d'uranium retenue dans la colonne est de 0,6% en masse.

### RÉFÉRENCE CITÉE

[1] Brevet US 5,826,163

## Revendications

1. Utilisation d'un composé KMgF₃ pour piéger des métaux présents sous la forme de fluorures et/ou d'oxyfluorures dans une phase gazeuse ou liquide.

2. Utilisation selon la revendication 1, dans laquelle les métaux sont choisis parmi le technétium, le rhénium, le vanadium, le molybdène, le niobium, le tantale, l'antimoine et le titane.

3. Utilisation selon la revendication 1 ou la revendication 2, dans laquelle le composé KMgF₃ est utilisé pour purifier de l'hexafluorure d'uranium.

4. Utilisation selon l'une quelconque des revendications précédentes, dans laquelle le composé KMgF₃ présente une surface spécifique au moins égale à 30 m²/g.

5. Utilisation selon l'une quelconque des revendications précédentes, dans laquelle le composé KMgF₃ présente une surface spécifique au plus égale à 150 m²/g.

6. Utilisation selon l'une quelconque des revendications précédentes, dans laquelle le composé KMgF₃ est utilisé sous la forme d'agglomérats, de granulés ou de pastilles.

7. Utilisation selon la revendication 6, dans laquelle le composé KMgF₃ est utilisé sous la forme de pastilles dont la plus grande dimension est au plus égale à 3 mm.

8. Utilisation selon l'une quelconque des revendications précédentes, dans laquelle le composé KMgF₃ est utilisé conjointement avec un autre composé capable de piéger des espèces chimiques et, de préférence, du difluorure de magnésium.

9. Utilisation selon l'une quelconque des revendications précédentes, dans laquelle le composé KMgF₃ est soumis avant son utilisation à un traitement de fluoration.

10. Utilisation selon l'une quelconque des revendications précédentes, dans laquelle le composé KMgF₃ est utilisé à une température allant de la température ambiante à 200°C et, de préférence, de 80 à 200°C.

11. Utilisation selon l'une quelconque des revendications précédentes, dans laquelle le composé KMgF₃ est mis en contact avec la phase gazeuse ou la phase liquide contenant les métaux devant être piégés pendant une durée d'au moins 20 secondes.

12. Utilisation selon la revendication 11, dans laquelle le composé KMgF₃ est mis en contact avec la phase gazeuse contenant les métaux devant être piégés pendant une durée allant de 60 à 300 secondes.

13. Utilisation selon la revendication 11, dans laquelle le composé KMgF₃ est mis en contact avec la phase liquide contenant les métaux devant être piégés pendant une durée allant de 60 à 600 secondes.

14. Utilisation selon l'une quelconque des revendications précédentes, dans laquelle le composé KMgF₃ est préparé par :
- réaction entre un composé de magnésium et du bifluorure de potassium en solution dans un alcool ou un mélange d'alcools, en présence d'acide fluorhydrique ; puis
- calcination du produit résultant de cette réaction.

15. Utilisation selon les revendications 1 à 13, dans laquelle le composé KMgF₃ est préparé par imprégnation de difluorure de magnésium par une solution aqueuse comprenant du fluorure de potassium.

## Patentansprüche

1. Verwendung einer KMgF₃-Verbindung zum Einfangen von Metallen, die in der Form von Fluoriden und/oder von Oxyfluoriden vorhanden sind, in einer gasförmigen oder flüssigen Phase.

2. Verwendung nach Anspruch 1, bei der die Metalle ausgewählt sind aus Technetium, Rhenium, Vanadium, Molybdän, Niob, Tantal, Antimon und Titan.

3. Verwendung nach Anspruch 1 oder Anspruch 2, bei der die KMgF₃-Verbindung zum Reinigen von Uranhexafluorid verwendet wird.

4. Verwendung nach einem der vorhergehenden Ansprüche, bei der die KMgF₃-Verbindung eine spezifische Oberfläche von wenigstens gleich 30 m²/g aufweist.

5. Verwendung nach einem der vorhergehenden Ansprüche, bei der die KMgF₃-Verbindung eine spezifische Oberfläche von höchstens gleich 150 m²/g aufweist.

6. Verwendung nach einem der vorhergehenden Ansprüche, bei der die KMgF₃-Verbindung in Form von Agglomeraten, Granulaten oder Pastillen verwendet wird.

7. Verwendung nach Anspruch 6, bei der die KMgF₃-Verbindung in der Form von Pastillen verwendet wird, deren größte Abmessung höchstens gleich 3 mm beträgt.

8. Verwendung nach einem der vorhergehenden Ansprüche, bei der die KMgF₃-Verbindung zusammen mit einer anderen Verbindung verwendet wird, die dazu ausgelegt ist, chemische Stoffe einzufangen, und vorzugsweise Magnesiumdifluorid.

9. Verwendung nach einem der vorhergehenden Ansprüche, bei der die KMgF₃-Verbindung vor ihrer Verwendung einer Fluorierungsbehandlung unterzogen wird.

10. Verwendung nach einem der vorhergehenden Ansprüche, bei der die KMgF₃-Verbindung bei einer Temperatur verwendet wird, die von der Umgebungstemperatur bis 200°C geht, vorzugsweise von 80 bis 200 °C.

11. Verwendung nach einem der vorhergehenden Ansprüche, bei der die KMgF₃-Verbindung während einer Dauer von wenigstens 20 Sekunden in Kontakt mit der gasförmigen Phase oder der flüssigen Phase gebracht wird, die die Metalle enthält, welche eingefangen werden sollen.

12. Verwendung nach Anspruch 11, bei der die KMgF₃-Verbindung während einer Dauer, die von 60 bis 300 Sekunden geht, in Kontakt mit der gasförmigen Phase gebracht wird, die die Metalle enthält, welche eingefangen werden sollen.

13. Verwendung nach Anspruch 11, bei der die KMgF₃-Verbindung während einer Dauer, die von 60 bis 600 Sekunden geht, in Kontakt mit der flüssigen Phase gebracht wird, die die Metalle enthält, welche eingefangen werden sollen.

14. Verwendung nach einem der vorhergehenden Ansprüche, bei der die KMgF₃-Verbindung hergestellt wird durch:
- eine Reaktion zwischen einer Magnesiumverbindung und Kaliumdifluorid in Lösung in einem Alkohol oder einer Mischung von Alkoholen in Anwesenheit von Fluorwasserstoffsäure; und anschließend
- Kalzinierung des aus dieser Reaktion resultierenden Produkts.

15. Verwendung nach den Ansprüchen 1 bis 13, bei der die KMgF₃-Verbindung hergestellt wird durch Imprägnieren von Magnesiumdifluorid mit einer wässrigen Lösung, die Kaliumfluorid enthält.

## Claims

1. Use of a KMgF₃ compound to trap metals present in the form of fluorides and/or of oxyfluorides in a gaseous or liquid phase.

2. Use according to claim 1, in which the metals are chosen from among technetium, rhenium, vanadium, molybdenum, niobium, tantalum, antimony and titanium.

3. Use according to claim 1 or claim 2, in which the KMgF₃ compound is used to purify uranium hexafluoride.

4. Use according to any one of the previous claims, in which the KMgF₃ compound has a surface specific area at least equal to 30 m²/g.

5. Use according to any one of the previous claims, in which the KMgF₃ compound has a surface specific area at most equal to 150 m²/g.

6. Use according to any one of the previous claims, in which the KMgF₃ compound is used in the form of agglomerates, granulates or pellets.

7. Use according to claim 6, in which the KMgF₃ compound is used in the form of pellets, the largest dimension of which is at most equal to 3 mm.

8. Use according to any one of the previous claims, in which the KMgF₃ compound is used jointly with another compound able to trap chemical species and, preferably, magnesium difluoride.

9. Use according to any one of the previous claims, in which the KMgF₃ compound is subjected to a fluoridation treatment before being used.

10. Use according to any one of the previous claims, in which the KMgF₃ compound is used at a temperature ranging from ambient temperature to 200°C and, preferably, from 80 to 200°C.

11. Use according to any one of the previous claims, in which the KMgF₃ compound is brought into contact with the gaseous phase or the liquid phase containing the metals intended to be trapped for a period of at least 20 seconds.

12. Use according to claim 11, in which the KMgF₃ compound is brought into contact with the gaseous phase containing the metals intended to be trapped for a period ranging from 60 to 300 seconds.

13. Use according to claim 11, in which the KMgF₃ compound is brought into contact with the liquid phase containing the metals intended to be trapped for a period ranging from 60 to 600 seconds.

14. Use according to any one of the previous claims, in which the KMgF₃ compound is prepared by:
- reacting a magnesium compound with potassium bifluoride in solution in an alcohol or a blend of alcohols, in the presence of hydrofluoric acid, followed by
- calcinating the product resulting from this reaction.

15. Use according to claims 1 to 13, in which the KMgF₃ compound is prepared by impregnating magnesium difluoride by an aqueous solution containing potassium fluoride.
